# EUROPEAN PATENT APPLICATION

(11) **EP 3 828 954 A1**
(43) Date of publication of application: **02.06.2021**
(21) Application number: 19275130.3
(22) Date of filing: 26.11.2019
(51) Int. Cl.: H01M 2/10, H01M 10/04

(54) **CONTAINMENT STRUCTURE FOR A BATTERY**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

According to an aspect of the invention, there is provided a containment structure for use on a vehicle, the containment structure arranged to, in use, inhibit expansion of a plurality of battery cells by physically restraining the plurality of battery cells.

## Description

The present invention relates generally to a containment structure, and in particular to a containment structure for a battery. The present invention also relates generally to related containment structures.

Solar powered vehicles such as High-Altitude Long Endurance Unmanned Aerial Vehicles (HALE UAV) use solar power, assisted by onboard solar panels, to power the vehicle during daytime. During the night, the aircraft relies on batteries, such as Lithium-ion batteries, to power the vehicle using stored solar energy. The cells that form the battery are sensitive to pressure variations and changes in physical separation of the electrodes. Allowing the cells to expand and contract, for example through reducing external pressure, degrades the lifetime of the battery cells. HALE UAVs, operating at altitudes between 55,000 and 65,000 feet, experience atmospheric pressure much lower than the nominal atmospheric pressure - under 10% - causing the battery cells to expand, leading to a loss of performance and loss of battery life.

It is an aim of example embodiments to at least partially overcome or avoid one or more disadvantages of the prior art, described above or elsewhere, or to at least provide an improved or even an alternative system to those already in existence.

According to the present invention there is provided an apparatus and method as set forth in the appended claims. Other features of the invention will be apparent from the dependent claims, and the description which follows.

According to an aspect of the invention, there is provided a containment structure for use on a vehicle, the containment structure arranged to, in use, inhibit expansion of a plurality of battery cells by physically restraining the plurality of battery cells. Thus, the expansion stress on the battery cells can be mitigated.

The containment structure may comprise carbon fibre. Thus, the containment structure can be lightweight, and therefore can be used in systems where performance is critically dependent on total mass.

The containment structure may comprise at least one open end. Thus, the containment structure can be lightweight, as only necessary structures are provided, since expansion of the battery cells tends to occur in one plane only.

The containment structure may be configured to receive the plurality of battery cells via the at least one open end. Thus, the containment structure can easily receive the battery cells, without need for disassembling the containment structure.

The containment structure may be arranged to, in use, surround a circumference of the plurality of battery cells to physically restrain the plurality of battery cells. Thus, the expansion stress on the battery cells can be mitigated.

The containment structure may comprise a layer of a polymeric foam sandwiched between a plurality of layers of carbon fibre. Thus, the rigidity of the containment structure can be improved, thereby improving the expansion inhibition of the containment structure.

The polymeric foam may comprise polymethacrylimide foam. Thus, the rigidity of the containment structure can be improved, thereby improving the expansion inhibition of the containment structure, whilst minimising the weight of the containment structure.

The containment structure may comprise a layer of a meta-aramid material sandwiched between a plurality of layers of carbon fibre. Thus, the rigidity of the containment structure can be improved, thereby improving the expansion inhibition of the containment structure.

The vehicle may be an unmanned aerial vehicle (UAV). Thus, the containment structure is suitable for use on drones.

The vehicle may be a high-altitude, long endurance (HALE) vehicle. Thus, the containment structure is suitable for use at high altitudes.

The plurality of battery cells may comprise one of prismatic cells and pouch cells. Thus, the total weight of the system can be reduced, as said cells are lighter than cylindrical cells.

According to another exemplary embodiment, provided is a battery pack comprising a plurality of battery cells; and the containment structure of any preceding claim. Thus, the expansion stress on the battery cells can be mitigated.

According to another exemplary embodiment, provided is a method of manufacturing a battery pack for use on a vehicle, the method comprising the steps of: providing the containment structure of any preceding claim; and housing a plurality of battery cells therein. Thus, the expansion stress on the battery cells can be mitigated.

Although a few preferred embodiments of the present invention have been shown and described, it will be appreciated by those skilled in the art that various changes and modifications might be made without departing from the scope of the invention, as defined in the appended claims.

For a better understanding of the invention, and to show how embodiments of the same may be carried into effect, reference will now be made, by way of example only, to the accompanying diagrammatic Figures in which:
Figure 1 schematically depicts a containment structure for use on a vehicle according to an example embodiment;
Figure 2 schematically depicts a containment structure for use on a vehicle according to another example embodiment;
Figure 3a schematically depicts a plurality of battery cells for use with the invention;
Figure 3b schematically depicts the plurality of battery cells for use with the invention, the plurality of battery cells being expanded;
Figure 4 schematically depicts a battery pack according to an example embodiment;
Figure 5 depicts example methodology according to an example embodiment.

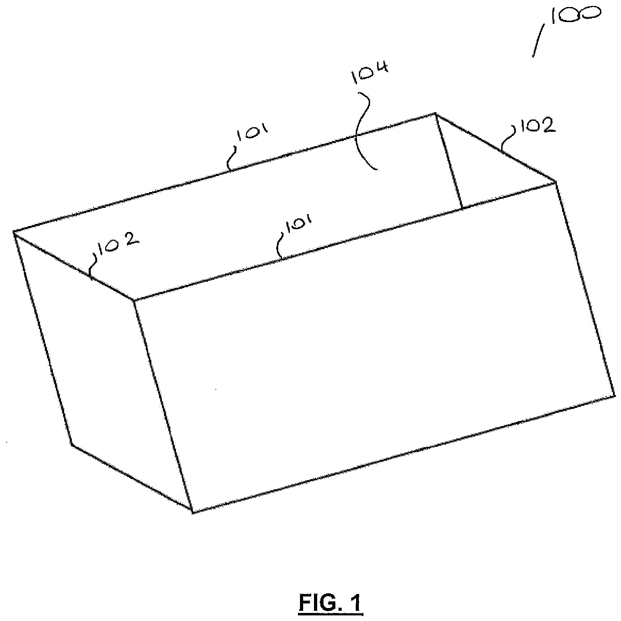

Figure 1 schematically depicts a containment structure 100 for use on a vehicle. The vehicle could be any vehicle capable of carrying or otherwise being connected to a battery pack. The vehicle could be an aircraft. The vehicle could be a manned vehicle, or an unmanned vehicle. In one particular example the vehicle is a high-altitude long endurance (HALE) aircraft. Herein, embodiments relate to the containment structure 100 being disposed on-board the vehicle, i.e. inside a structure of the vehicle, or disposed on its outer surface or in a unit coupled to the outer surface.

Referring to Figure 1, the containment structure 100 comprises a first pair of side walls 101, and a second pair of side walls 102. In this particular example, and strictly by way of example only, the first pair of side walls 101 is wider than the second pair of side walls 102. The containment structure 100 may further comprise a bottom panel, connected to the first pair of side walls 101 and the second pair of side walls 102, in order to improve structural integrity of the containment structure 100.

The containment structure 100 comprises at least one open end 104. The at least one open end 104 enables the containment structure 100 to receive a plurality of battery cells without the need for removing side walls and/or panels of the containment structure, thereby improving the ease of installation, and reducing the number of points of structural weakness.

The containment structure 100 is arranged to, in use, inhibit expansion of a plurality of battery cells by physically restraining the plurality of battery cells. The containment structure 100 may be designed with only tension forces considered, not compression. As such, the containment structure 100 may be designed to withstand a high increase in expansional loads without the added mass and thickness that would be required to withstand compressional loads.

Thus, it is preferred that the containment structure 100 is made from a material of suitable rigidity, such that the containment structure 100 does not, in use, become deformed due to expansion of battery cells placed within. However, due to the intended use of the containment structure 100 - that is, for vehicles, in particular aerial vehicles - mass restrictions apply. Ideally, the containment structure 100 should be made of a lightweight material, so that performance of the aerial vehicle is not affected negatively. This is of particular importance in case of HALE vehicles, where performance of the system is critically dependent on mass. For example, the containment structure 100 may comprise carbon fibre. In particular, the first pair of side walls 101 and the second pair of side walls 102 may both comprise carbon fibre.

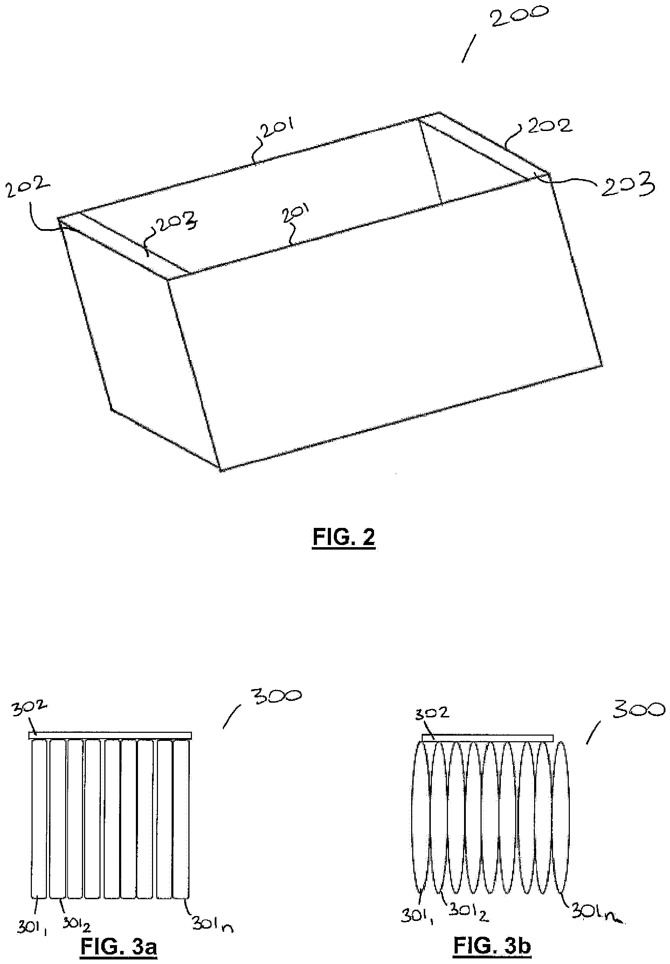

Figure 2 schematically depicts a containment structure 200 for use on a vehicle according to another example embodiment. The containment structure 200 largely corresponds to the containment structure 100 depicted in Figure 1. The containment structure 200 comprises a first pair of side walls 201, and a second pair of side walls 202.

However, in addition to the features described in relation to Figure 1, the containment structure 200 comprises a plurality of sandwich panels 203 arranged to improve rigidity of the second pair of side walls 202. In particular, a first sandwich panel from amongst the plurality of sandwich panels 203 may be positioned to support a first side wall of the second pair of side walls 202, and a second sandwich panel from amongst the plurality of sandwich panels 203 may be positioned to support a second side wall of the second pair of side walls 202. In one particular example, the sandwich panels 203 comprise a layer of a polymeric foam, although any other suitable lightweight material may be used. In another example, the sandwich panels 203 comprise a layer of a meta-aramid material such as Nomex, also suitable for improving rigidity of the containment structure 200.

Said layer of a polymeric foam may be sandwiched between a plurality of layers of carbon fibre. In one particular example, the layer of polymeric foam may be sandwiched between the first (or the second) side wall of the second pair of side walls 202, and another layer of carbon fibre in order to improve rigidity without compromising weight. In one example, the polymeric foam comprises polymethacrylimide foam - a lightweight material capable of increasing rigidity of a composite structure such as the containment structure. An example of such polymethacrylimide foam is Rohacell. Improving rigidity of the second pair of side walls 202 can help inhibit the expansion of the plurality of battery cells.

Figure 3a schematically depicts a plurality of battery cells 300 for use with the invention. The plurality of battery cells 300 comprises a plurality of interconnected battery cells (301₁, 301₂, ..., 301ₙ), and circuitry 302 suitable for connecting the plurality of battery cells to external hardware, controlling the plurality of battery cells, and so on. The plurality of battery cells 300 may be connected in parallel configuration, in series configuration, or in a combination of the two, depending on the design. The plurality of battery cells 300 may comprise one or more of lithium-ion battery cells, lithium-air battery cells, and lithium-sulphur battery cells.

In order to minimise the mass of the vehicle they are employed on, e.g. the mass of an aircraft, prismatic or so-called pouch cells may be used. Said cells consist of layers of anodes and cathodes arranged in a flat, rectangular form, in contrast to cylindrical cells, in which electrodes are typically wrapped up in a coil.

The cells that form the plurality of battery cells 300 are sensitive to changes in physical separation between the electrodes. Allowing the battery cells to expand and contract degrades the lifespan of the battery. The expansion usually occurs as a result of overcharging and discharging of the cells, and can also be caused by reducing the external pressure on the battery cell below the nominal atmospheric pressure. This issue is especially prominent in battery cells used on aircrafts, as the atmospheric pressure decreases with altitude. For example, High-Altitude Long Endurance (HALE) vehicles operating at altitudes between 55,000 and 65,000 feet experience atmospheric pressures of 30-100mbar - under 10% of atmospheric pressure. Such external pressure leads to an expansion stress in the battery cells, thereby decreasing the performance/lifespan of the battery. The containment structure 100 aims to mitigate the loss of external pressure related to altitude. For a better understanding of the invention, Figure 3b schematically depicts the plurality of battery cells 300 after expansion. While Figure 3b depicts a situation in which each battery cell 301ₙ from among the plurality of battery cells 300 is subject to expansion, it will be appreciated that the depiction is exemplary, and that the containment structure 100 may be used to inhibit expansion of at least one battery cell from among the plurality of battery cells 300.

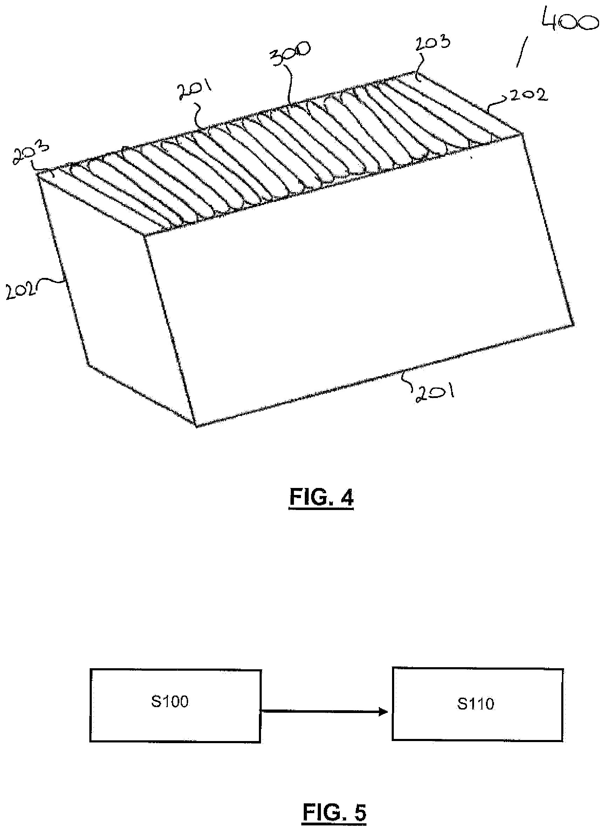

Figure 4 schematically depicts a battery pack according to an example embodiment. The battery pack 400 comprises the previously-described containment structure 200, and a plurality of battery cells 300. The containment structure 200 is arranged to, in use, inhibit expansion of a plurality of battery cells 300 by physically restraining the plurality of battery cells 300. For example, the containment structure 200 may be arranged to, in use, surround a circumference of the plurality of battery cells 300 to physically restrain the plurality of battery cells, thereby preventing the plurality of battery cells from swelling/bulging. In use, the plurality of battery cells 300 is housed within the containment structure 200; the containment structure 200 inhibits expansion of the plurality of battery cells 300 by limiting the amount of space available for the expanding battery cells to occupy. The expansion of battery cells from among the plurality of battery cells 300 will be resisted by rigidity of the containment structure 200.

Figure 5 describes general methodology associated with recently described embodiments. The method is for manufacturing a battery pack for use on a vehicle. The method comprises providing the previously described containment structure S100, and housing a plurality of battery cells therein S110.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A containment structure for use on a vehicle, the containment structure arranged to, in use, inhibit expansion of a plurality of battery cells by physically restraining the plurality of battery cells.

2. The containment structure of claim 1, wherein the containment structure comprises carbon fibre.

3. The containment structure of claim 1 or 2, wherein the containment structure comprises at least one open end.

4. The containment structure of claim 3, wherein the containment structure is configured to receive the plurality of battery cells via the at least one open end.

5. The containment structure of any preceding claim, wherein the containment structure is arranged to, in use, surround a circumference of the plurality of battery cells to physically restrain the plurality of battery cells.

6. The containment structure of claim 2, wherein the containment structure comprises a layer of a polymeric foam sandwiched between a plurality of layers of carbon fibre.

7. The containment structure of claim 6, wherein the polymeric foam comprises polymethacrylimide foam.

8. The containment structure of claim 2, wherein the containment structure comprises a layer of a meta-aramid material sandwiched between a plurality of layers of carbon fibre.

9. The containment structure of any preceding claim, wherein the vehicle is an unmanned aerial vehicle.

10. The containment structure of any preceding claim, wherein the vehicle is a high-altitude, long endurance vehicle.

11. The containment structure of any preceding claim, wherein the plurality of battery cells comprises one of prismatic cells and pouch cells.

12. A battery pack comprising: a plurality of battery cells; and the containment structure of any preceding claim.

13. A method of manufacturing a battery pack for use on a vehicle, the method comprising the steps of: providing the containment structure of any preceding claim; and housing a plurality of battery cells therein.
